# NEUE EUROPÄISCHE PATENTSCHRIFT

(11) **EP 0 604 608 B2**
(45) Veröffentlichungstag und Bekanntmachung des Hinweises auf die Entscheidung über den Einspruch: **14.11.2001**
(45) Hinweis auf die Patenterteilung: 11.03.1998
(21) Anmeldenummer: 93912730.4
(22) Anmeldetag: 20.05.1993
(51) Int. Cl.: F16K 1/42

(54) **ABSPERRVENTIL**
SHUT-OFF VALVE
ROBINET D'ARRET

(30) Priorität: 22.05.1992 DE 4217006
(43) Veröffentlichungstag der Anmeldung: 06.07.1994
(73) Patentinhaber: Hans Grohe GmbH & Co. KG, 77761 Schiltach (DE)
(72) Erfinder: LORCH, Werner, D-78713 Schramberg (DE)
(74) Vertreter: Patentanwälte Ruff, Wilhelm, Beier, Dauster & Partner
(86) Internationale Anmeldenummer: EP9301254
(87) Internationale Veröffentlichungsnummer: WO9324774

(56) Entgegenhaltungen:
- EP-A- 0 471 643
- DE-A- 2 737 839
- DE-A- 3 737 036
- DE-B- 2 319 885
- DE-C- 235 072
- FR-A- 2 280 842
- FR-A- 2 390 656
- GB-A- 544 524
- US-A- 3 923 283

## Beschreibung

Die Erfindung betrifft ein als Ventiloberteil ausgebildetes Absperrventil zum Einsatz in Sanitärarmaturen.

Es ist bereits ein Ventiloberteil für Santitärarmaturen bekannt (DE-OS 27 37 839), bei dem ein axial bewegbarer, mit einer gummiartigen Dichtung versehener Schließkörper auf einen ringförmig ausgebildeten Ventilsitzkörper zu bewegbar ist. Ein Bediener kann so lange an dem Betätigungselement drehen, bis er glaubt, daß das Ventil geschlossen ist. Er kann also unzulässig hohe Pressungen hervorrufen, die zum frühzeitigen Verschleiß des Ventils führen.

Weiterhin bekannt ist ein Absperrventil (DE-PS 29 38 315), bei dem der Verschließkörper eine zwischen zwei metallischen Teilen eingespannte Gummischeibe aufweist, wobei der Verschließkörper mit einem kegelförmigen Ventilsitz zusammenwirkt. Bei zu festem Zudrehen des Ventils liegen Metallteile aneinander, so daß die Gummischeibe nicht überbeansprucht wird. Jedoch ist das Ventil sehr aufwendig aufgebaut.

Weiterhin bekannt ist ein Absperr- und Regelventil (DE-PS2428 242), bei der das an dem Ende einerSpindel angeordnete Dichtelement eine zwischen zwei Scheiben angeordnete elastische Dichtung aufweist. Der Ventilsitz ist ebenfalls kegelförmig ausgebildet. Eine Begrenzung der Betätigung erfolgt dadurch, daß die metallische Stirnseite des Betätigungselementes an dem metallischen Ventilsitz anliegt. Da die Stirnseite aber nur linienförmig an dem kegelförmigen Ventilsitz anliegt, kann dies zu Beschädigungen des Ventilsitzes führen.

Weiterhin bekannt ist ein Ventil mit den Merkmalen des ersten Teils des Anspruchs 1 (DE-C-235 072). Bei diesem Ventil ist in einer Ventilbrücke eine Stopfbüchse angeordnet, deren Stopfbüchsenpackung gegen die zerstörende Wirkung der Druckflüssigkeit geschützt werden soll. Zu diesem Zweck ist ein Hohischiebervorhanden, der einen Ventilsitz bildet und von dem Verschlußkörper gegen die Wirkung einer Feder verschoben werden kann. In der Verschlußstellung liegt der metallische Verschlußkörper an einer metallischen Fläche des Schiebers, der seinerseits wieder am Gehäuse anliegt.

Weiterhin bekannt ist ein Ventiloberteil (EP 471643 A1), bei dem ein axiale bewegbarer Verschließkörper an einer den Ventilsitz bildenden axial nicht verschiebbaren verformbaren Manschette anliegt. Ein Sprengring dient zur Begrenzung der axialen Bewegbarkeit des Schließkörpers.

Ebenfalls bekannt sind Dichtmanschetten, die unter Federspannung gegen eine Ventilfläche beaufschlagt werden (DE-A1-3737036, DE-B2-231985). Die Ventilfläche wird quer zur Beaufschlagungsrichtung bewegt, und die Manschette liegt immer an der Ventilfläche an.

Der Erfindung liegt die Aufgabe zugrunde, ein Absperrventil, als Ventiloberteil zu schaffen, das einfach aus nur wenigen Funktionsteilen bestehend aufgebaut ist und einen geringen Verschleiß aufweist.

Zur Lösung dieser Aufgabe schlägt die Erfindung ein Absperrventil mit den Merkmalen des Anspruchs 1 vor. Weiterbildungen der Erfindung sind Gegenstand der Unteransprüche.

Mit dem von der Erfindung vorgeschlagenen Absperrventil ist es mit einfachen Maßnahmen möglich, daß die auf den Ventilsitz einwirkenden Kräfte begrenzt werden, so daß das Ventil einem geringen Verschleiß unterliegt und daher eine lange Lebensdauer aufweist. Die Nachgiebigkeit des Ventilsitzes gegenüber den mit ihm zum Verschließen des Ventils zusammenwirkenden Schließkörper sorgt dafür, daß die Flächenpressung niedrig bleibt.

Erfindungsgemäß ist in Weiterbildung vorgesehen, daß der Ventilsitz eine von einer Feder beaufschlagten Manschette aus gummielastischen Material aufweist. Diese Manschette bildet im Bereich ihrer dem Schließkörper zugewandten Stimseite die Verschlußfläche des Ventilsitzes. Die Manschette kann mit Vorteil in ihrer dem Verschließkörper zugewandten Stellung durch einen an ihr angreifenden Anschlag festgehalten werden.

Erfindungsgemäß ist vorgesehen, daß der Anschlag an dem Betätigungselement angreift.

Die Erfindung schlägt vor, den durch den Anschlag begrenzten Bewegungsweg des Schließkörpers so auszugestalten, daß der Bewegungsweg etwas weiterführt als bis zu der schließkörperseitigen Endstellung des Ventilsitzes. In Schließstellung des Ventilsfindet daher ein Anliegen des Schließkörpers an dem Ventilsitz immer unter der Beaufschlagungswirkung des Ventilsitzes statt, wobei zur Beaufschlagung insbesondere eine Feder dienen kann, die an dem Ventilsitz und/oder der Manschette angreift.

Es kann bei dem von der Erfindung vorgeschlagenen Ventil vorgesehen sein, daß der Schließkörper ein Teil des Betätigungselementes ist, also einstückig mit diesem ausgebildet ist. Erfindungsgemäß kann jedoch mit Vorteil vorgesehen sein, daß der Schließkörper ein von dem Betätigungselement getrenntes Bauteil ist. Es wird daher möglich, den Schließkörper aus billigerem Material herzustellen, beispielsweise einstückig aus Kunststoff zu spritzen. Die mechanische Bewegung und Führung des Schließkörpers kann dann von metallischen Bauteilen übernommen werden.

Die Erfindung schlägt vor, das Betätigungselement als Drehspindel auszubilden. Dabei kann es sich sowohl um eine übliche Drehspindel handeln, bei der aufgrund eines Gewindeeingriffs bei jeder Drehung gleichzeitig auch eine Längsbewegung stattfindet. Es ist aber auch möglich, daß das Betätigungselement von einem sich axial nicht bewegenden Drehelement gebildet wird.

Der Schließkörper kann, wie die Erfindung vorschlägt, beispielsweise nur axial bewegbar geführt sein, so daß also bei Längsbewegung keine Drehung auftritt. Dies führt insbesondere auch dazu, daß beim Angriff zwischen dem Schließkörper und dem Ventilsitz keine Relativbewegung in Umfangsrichtung stattfindet, was zur verbesserten Lebensdauer beitragen kann.

Ebenfalls möglich ist es, eine Relativbewegung in Umfangsrichtung zuzulassen und diese dazu zu benutzen, Ablagerungen von Kalk und/oder sonstigen Verunreinigungen abzustreifen.

Zur Bewegung des Schließkörpers kann vorgesehen sein, daß dieser mit einem Gewinde in das Oberteilgehäuse des Absperrventils eingreift. Es ist jedoch ebenfalls möglich, daß er mit einem Gewinde in ein Gewinde des Betätigungselementes eingreift und dadurch axial bewegt wird. Es kann sich dabei mit Vorteil um ein mehrgängiges, insbesondere zweigängiges Gewinde handeln.

Die Erfindung schlägt vor, die Dichtmanschette in einem Gehäuse zu haltern, das ggf. als auswechselbares Teil in das Absperrventil einsetzbar ist. Insbesondere ist es möglich, dieses Gehäuse zweiteilig auszubilden und in das Oberteilgehäuse einzupressen.

Die Erfindung schlägt vor, den Anschlag einstückig am Ventiloberteil vorzusehen. Mit diesem gehäuseseitigen Anschlag kann ein Anschlagsgegenelement des Betätigungselementes zusammenwirken, das vorzugsweise als winkelmäßig verstellbarer Anschlagring ausgebildet ist. Der Teil des Betätigungselementes, an dem der Handgriff befestigt wird, enthält häufig eine zahnradförmige Querschnittsform. Es ist daher möglich, den Anschlagring mit einer gleichen Zahnung zu versehen, so daß er in vielen Positionen festlegbar ist.

Bevorzugt wird das Absperrventil als komplette Baueinheit zum Einsetzen in Armaturen mit Standardmaßen ausgebildet.

Weitere Merkmale, Einzelheiten und Vorzüge der Erfindung ergeben sich aus der folgenden Beschreibung bevorzugter Ausführungsformen der Erfindung sowie anhand der Zeichnung. Hierzeu zeigen:
- Fig. 1: einen Längsschnitt durch ein als Ventiloberteil ausgebildetes Absperrventil nach der Erfindung;
- Fig. 2: eine Aufsicht auf das Ventiloberteil der Fig. 1;
- Fig. 3: einen der Fig. 1 entsprechenden Längsschnitt bei einer zweiten Ausführungsform.

Wie bereits erwähnt, ist das Absperrventil nach der Erfindung in den dargestellten Ausführungsformen als Ventiloberteil zum Einsatz in eine Sanitärarmatur, insbesondere eine solche mit Standardabmessungen, ausgebildet. Das Ventiloberteil enthält ein Gehäuse 1, das zur Halterung der unterschiedlichen Bauelemente dient und mit dem das Absperrventil in eine Sanitärarmatur einschraubbar ist. Das Gehäuse enthält eine Lagerbohrung 2 für ein Betätigungselement 3, das im dargestellten Beispiel als Drehspindel ausgebildet ist. Die Drehspindel enthält einen mittleren Abschnitt 4 mit mehreren radial angeordneten umlaufenden Flanschen 5, zwischen denen Nuten zur Unterbringung von Dichtungsringen 6 gebildet sind. Der Außendurchmesser der Flansche 5 ist geringfügig kleiner als der Innendurchmesser der Lagerbohrung 2. An den mittleren Abschnitt 5 schließt sich in Richtung auf die Außenseite des Gehäuses 1 ein Betätigungsabschnitt 7 an, dessen Außenseite mit einer Verzahnung 8 versehen ist. In die Verzahnung 8 greift ein Anschlagring 9 ein, der gleichzeitig das Betätigungselement 3 axial festlegt. Zur Sicherung des Anschlagrings 9 dient eine Sicherungsklemme 10.

Im Bereich seines in das Innere des Gehäuses 1 gerichteten Endes ist das Betätigungselement 3 mit einem sechskantförmigen Ansatz 11 versehen. Mit diesem sechskantigen Ansatz 11 greift das Betätigungselement 3 in eine im Querschnitt ebenfalls sechseckige Innenausnehmung 12 eines Schließkörpers 13 ein. Der Schließkörper 13 weist an seiner Außenseite ein Gewinde 14 auf, mit dem er in ein Innengewinde 15 des Innenraumes 16 des Gehäuses 1 eingreift. Eine Verdrehung des Schließkörpers 13 bewegt ihn gleichzeitig auch axial. Der Schließkörper weist im Bereich seines von dem Betätigungselement 3 wegzeigenden Endes eine ebene Schließfläche 17 mit abgerundetem Rand auf. Anstelle einer sechseckigen Ausbildung könnte auch eine andere Form verwendet werden, die für eine Drehverbindung sorgt.

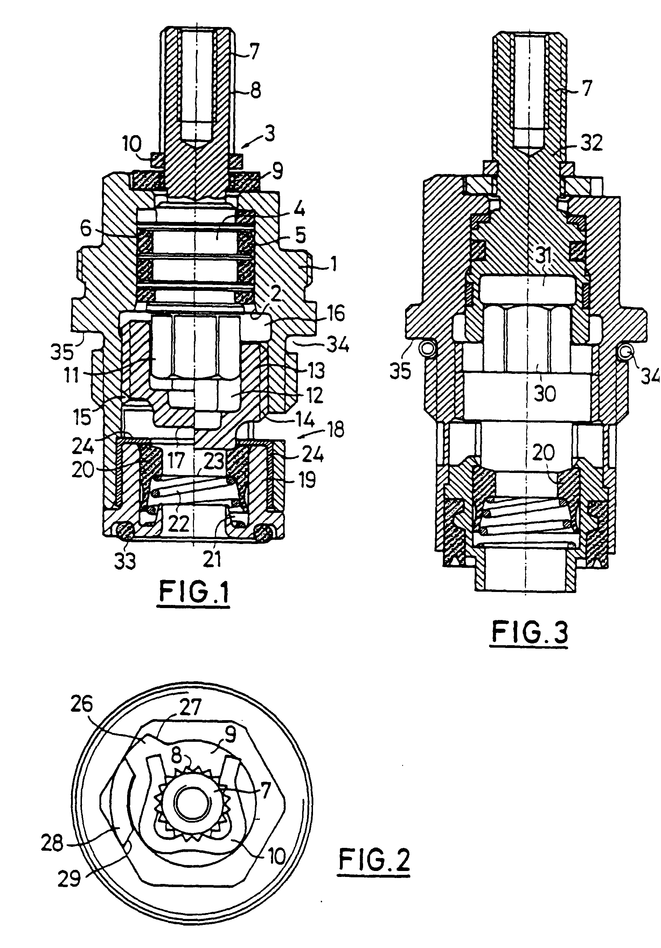

Dem Schließkörper 13 gegenüberliegend ist am, in der Fig. 1 unteren Ende des Gehäuses 1 ein Ventilsitz 18 gebildet. Der Ventilsitz 18 enthält eine zylindrische Buchse 19, innerhalb der eine aus gummielastischem Material bestehende Manschette 20 angeordnet ist. Die Buchse 19 enthält eine umlaufende, in Axialrichtung der Buchse 19 offene Nut 21, in der sich das eine Ende einer Druckfeder 22 abstützt. Das gegenüberliegende Ende der Druckfeder 22 beaufschlagt die Manschette 20 an einer Schulter 23 und drückt sie in Richtung auf den Schließkörper 13. Diese durch die Feder 22 bewirkte Verschiebung der Manschette 20 wird durch das Anliegen der Manschette 20 an einem topfförmigen Manschettenhalter 23 begrenzt. Der topfförmige Manschettenhalter 23 mit einer in seinem Boden 24 angeordneten Öffnung 25, die etwas größer ist als der Durchmesser der Schließfläche 17, ist über die Buchse 19 aufgepreßt, so daß die Buchse 19 und der Manschettenhalter 23 zusammen ein zweiteiliges Gehäuse für die Manschette 20 bilden. Dieses Gehäuse ist dann in die stimseitige Öffnung des Innenraums 16 des Gehäuses 1 ebenfalls eingepreßt. Der Manschettenhalter 23 kann in seinem Umfang mit Vorteil wellenförmig ausgebildet sein.

Das Wasser strömt von unten in Fig. 1 axial in das Gehäuse 1 ein. Zum Öffnen und Schließen des Ventils wird das Betätigungselement 3 verdreht, wobei die Drehbewegung des Betätigungselementes durch den Sechskantansatz 11 auf den Schließkörper 13 übertragen wird, der sich in dem Gewinde 14, 15 verdreht und dadurch axial bewegt. Von der links in Fig. 1 dargestellten geöffneten Stellung des Ventils gelangt der Schließkörper 13 dann in die rechts dargestellte Schließstellung, wobei die Schließfläche 17 in ihrem Umfangsbereich an der leicht kegelförmig ausgebildeten Stirnfläche der Manschette 20 anliegt. Bei einem Weiterdrehen des Betätigungselementes 3 kann sich die Manschette 20 axial zurückziehen, so daß eine zu große Flächenpressung und damit ein Verschleiß vermieden wird.

Fig. 2 zeigt in einer Aufsicht auf die Anordnung der Fig. 1 den Anschlagring 9, der auf den mit der Verzahnung 8 versehenen Betätigungsabschnitt 7 aufgesetzt ist. Die Innenöffnung des Anschlagrings 9 weist eine der Verzahnung 8 entsprechende Verzahnung auf, so daß der Anschlagring 9 drehfest befestigt ist. Der Anschlagring weist einen Vorsprung 26 mit zwei in Umfangsrichtung zeigenden Flächen 27 auf.

An der Oberseite des Gehäuses 1 ist ein Anschlag 28 einstückig ausgebildet, der ebenfalls zwei in Umfangsrichtung zeigende Flächen 29 aufweist. Der Vorsprung 26 des Anschlagrings 9 bildet eine Anschlagsgegenfläche für den ortsfesten Anschlag 28. Dadurch ist die Verdrehung des Betätigungselementes 3 begrenzt. Dieser Begrenzung der Drehbewegung entspricht eine Begrenzung der Vorschubbewegung des Schließkörpers 13, wobei der Anschlagring 9 so angebracht ist, daß eine Schließbewegung des Schließkörpers etwas weiter als bis zum Berühren des Ventilsitzes durch die Schließfläche 17 reicht. Zum richtigen Einstellen läßt sich der Anschlagring 9 abnehmen und um einen Winkel versetzen, der einem Vielfachen eines Zahnabstandes entspricht. Zur Sicherung des Anschlagrings dient die etwa U-förmige Sicherungsklammer 10. Diese greift in eine quer zur Längsrichtung vorgesehene Ringnut in der Verzahnung ein und bleibt dort aufgrund der Schenkelform verklemmt.

Fig. 3 zeigt nun eine Ausführungsform, bei der neben einer unterschiedlichen Lagerung des Betätigungselementes 3 der Verschlußkörper etwas anders ausgebildet ist. Er enthält keine sechskantige Vertiefung 12, sondern einen sechskantigen Ansatz 30, der in eine sechskantige Vertiefung 31 des Betätigungselementes 32 eingreift. Die Bewegung des Verschlußkörpers 13 ist im übrigen aber in gleicher Weise gelöst wie bei der Ausführungsform der Fig. 1.

Die Dichtungsmanschette 20 weist eine etwas andere Halterung auf, ist im übrigen aber in gleicher Weise geführt und ausgebildet.

Beide Ausführungsformen enthalten im Bereich ihrer dem Betätigungsabschnitt 7 abgewandten Seiten je eine Dichtung 33, die zur Abdichtung des dargestellten Ventiloberteils gegenüber einer Sanitärarmatur dient. Eine weitere Nut 34 ist benachbart zu einer Schulter 35 vorgesehen, mit der das Gehäuse 1 des Ventiloberteils an der Sanitärarmatur anliegt.

Während bei den dargestellten Ausführungsformen das Betätigungselement 3 als axial nicht bewegbare Drehspindel und der Schließkörper 13 als axial und drehend bewegbares Element ausgebildet ist, ist es selbstverständlich auch möglich, beispielsweise den Schließkörper 13 mit einem Gewinde an seiner Innenseite in ein entsprechendes Gewinde des Betätigungselementes 3 eingreifen zu lassen und ihn an seiner Außenseite an einer Drehung zu hindern. In diesem Fall würde sich der Schließkörper nur axial bewegen.

Weiterhin ist es möglich, das Betätigungselement als eine durch ein Gewinde geführte Drehspindel auszubilden, wobei dann in diesem Fall die Längsbewegung des Schließkörpers durch eine direkte Mitnahme des Betätigungselementes oder auch durch eine Axialführung erfolgen könnte.

Die dargestellte Ausführungsform hat den Vorteil, daß es möglich ist, den Schließkörper 13 als getrenntes Bauelement herzustellen, also beispielsweise aus Kunststoff billig herzustellen.

## Patentansprüche

1. Absperrventil zum Einsatz in Sanitärarmaturen, als Ventiloberteil, mit
1.1 einem drehbaren Betätigungselement (3)
1.2 einem von dem Betätigungselement (3) mindestens in Axialrichtung bewegbaren Schließkörper (13),
1.3 einem Ventilsitz (18),
1.3.1 der eine eine Sitzfläche enthaltende Manschette (20) aus gummielastischem Material aufweist, und
1.3.2 dessen Sitzfläche in Richtung auf den Schließkörper (13) begrenzt bewegbar und beaufschlagt ist, sowie mit
1.4 einem Anschlag (28) zur Begrenzung der Bewegung des Schließkörpers (13),
**dadurch gekennzeichnet, dass** die Manschette (20) von einer Feder in axialer Bewegungsrichtung des Schließkörpers (13) beaufschlagt ist und
dass der Anschlag (28) einstückig am Gehäuse des Ventiloberteils ausgebildet ist, und mit einem Anschlaggegenelement (26) an dem Betätigunsselement (3) zusammenwirkt wobei das Anschlaggegenelement an einem winkelmäßig verstellbaren Anschlagring (9) ausgebildet ist.

2. Absperrventil nach Anspruch 1, bei dem der Anschlag (28) an dem Betätigungselement (3) angreift.

3. Absperrventil nach einem der vorhergehenden Ansprüche, bei dem der durch den Anschlag (28) begrenzte Bewegungsweg des Schließkörpers (13) etwas weitergeht als bis zu der schließkörperseitigen Endstellung des Ventilsitzes.

4. Absperrventil nach einem der vorhergehenden Ansprüche, bei dem der Schließkörper (13) ein von dem Betätigungselement (3) getrenntes Bauteil ist.

5. Absperrventil nach einem der vorhergehenden Ansprüche, bei dem der Schließkörper (13) aus Kunststoff besteht.

6. Absperrventil nach einem der vorhergehenden Ansprüche, bei dem das Betätigungselement (3) eine Drehspindel aufweist.

7. Absperrventil nach einem der vorhergehenden Ansprüche, bei dem das Betätigungselement (3) von einem sich axial nicht bewegenden Drehelement gebildet wird.

8. Absperrventil nach einem der vorhergehenden Ansprüche, bei dem der Schließkörper (13) derart geführt ist, daß er sich nur axial bewegen kann.

9. Absperrventil nach einem der Ansprüche 1 bis 8, bei dem die Dichtmanschette (20) in einem in das Absperrventil einsetzbaren Gehäuse gehaltert wird.

10. Absperrventil nach Anspruch 9, bei dem das Gehäuse als Buchse (19) ausgebildet ist und mit der Manschette (20), der Feder (22) und dem Manschettenhalter (23) eine Baueinheit bildet.

11. Absperrventil nach Anspruch 10, bei dem die Baueinheit in das Ventilgehäuse (1) von unten her eingepreßt ist.

12. Absperrventil nach einem der vorhergehenden Ansprüche, bei dem der Schließkörper (13) über ein Gewinde (14, 15) im Oberteilgehäuse (1) axial bewegt wird.

13. Absperrventil nach einem der Ansprüche 1 bis 11, bei dem der Schließkörper (13) über ein Gewinde am Betätigungselement axial bewegt wird.

14. Absperrventil nach einem der vorhergehenden Ansprüche, als komplette Baueinheit zum Einsetzen in Sanitärarmaturen mit Standardmaßen ausgebildet.

## Claims

1. Stop valve for use in sanitary fittings, as a valve top, with
1.1 a rotary actuating member (3),
1.2 a closing body (13) movable at least in the axial direction by the actuating member (3),
1.3 a valve seat (18),
1.3.1 having a rubber-elastic material sleeve (20) containing a seating
1.3.2 whose seating can move to a limited extent and is urged in the direction of the closing body (13),
1.4 with a stop member (28) for limiting the movement of the closing body (13),
**characterized in that** the sleeve (20) is urged by a spring in the axial movement direction of the closing body (13) and that the stop member (28) is constructed on the housing of the valve top and cooperates with a stop countermember (26) on the actuating member (3), the stop countermember being constructed on an angularly adjustable stop ring (9).

2. Stop valve according to claim 1, wherein the stop member (28) acts on the actuating member (3).

3. Stop valve according to any one of the preceding claims, wherein the movement path of the closing body (13) limited by the stop member (28) extends somewhat further than up to the closing body-side end position of the valve seat.

4. Stop valve according to any one of the preceding claims, wherein the closing body (13) is a component separate from the actuating member (3).

5. Stop valve according to any one of the preceding claims, wherein the closing body (13) is made from plastic.

6. Stop valve according to any one of the preceding claims, wherein the actuating member (3) has a rotary spindle.

7. Stop valve according to any one of the preceding claims, wherein the actuating member (3) is formed by an axially non-movable rotary element.

8. Stop valve according to any one of the preceding claims, wherein the closing body (13) is guided in such a way that it can only move axially.

9. Stop valve according to any one of the claims 1 to 8, wherein the sealing sleeve (20) is held in a housing insertable in the stop valve.

10. Stop valve according to claim 9, wherein the housing is constructed as a bush (19) and forms a standard component with the sleeve (20), the spring (22) and the sleeve holder (23).

11. Stop valve according to claim 10, wherein the standard component is pressed from below into the valve housing (1).

12. Stop valve according to any one of the preceding claims, wherein the closing body (13) is moved axially by means of a thread (14, 15) in the top housing (1).

13. Stop valve according to any one of the claims 1 to 11, wherein the closing body (13) is moved axially by means of a thread on the actuating member.

14. Stop valve according to any one of the preceding claims constructed as a complete standard unit for use in sanitary fittings having standard dimensions.

## Revendications

1. Robinet d'arrêt à monter dans des armatures sanitaires, comme tête de robinet, comprenant
1.1 un élément d'actionnement rotatif (3),
1.2 un corps de fermeture (13) déplaçable au moins en direction axiale par l'élément d'actionnement (3),
1.3 un siège de robinet (18),
1.3.1 qui présente une manchette (20) en matière élastique caoutchoutée contenant une surface de siège, et
1.3.2 dont la surface de siège est déplaçable de manière limitée et sollicitée en direction du corps de fermeture (13), ainsi que
1.4 une butée (28) pour la limitation du mouvement du corps de fermeture (13),
**caractérisé en ce que** la manchette (20) est sollicitée par un ressort en direction de mouvement axiale du corps de fermeture (13), et **en ce que** la butée (28) est réalisée d'une seule pièce sur le boîtier de la tête de robinet et coopère avec un élément de butée antagoniste (26) sur l'élément d'actionnement (3), et dans lequel l'élément de butée antagoniste est réalisé sur une bague de butée (9) susceptible d'être réglée sur le plan angulaire.

2. Robinet d'arrêt suivant la revendication 1, dans lequel la butée (28) agit sur l'élément de commande (3).

3. Robinet d'arrêt suivant l'une quelconque des revendications précédentes, dans lequel la course du corps de fermeture (13) limitée par la butée (28) se prolonge légèrement au-delà de la position finale du siège du robinet du côté du corps de fermeture.

4. Robinet d'arrêt suivant l'une quelconque des revendications précédentes, dans lequel le corps de fermeture (13) est un composant séparé de l'élément de commande (3).

5. Robinet d'arrêt suivant l'une quelconque des revendications précédentes, dans lequel le corps de fermeture (13) est constitué de matière plastique.

6. Robinet d'arrêt suivant l'une quelconque des revendications précédentes, dans lequel l'élément de commande (3) présente une tige rotative.

7. Robinet d'arrêt suivant l'une quelconque des revendications précédentes, dans lequel l'élément de commande (3) est formé par un élément rotatif ne se déplaçant pas axialement.

8. Robinet d'arrêt suivant l'une quelconque des revendications précédentes, dans lequel le corps de fermeture (13) est guidé de façon telle qu'il ne puisse se déplacer qu'axialement.

9. Robinet d'arrêt suivant l'une quelconque des revendications 1 à 8, dans lequel la manchette d'étanchéité (20) est logée dans un boîtier à insérer dans le robinet d'arrêt.

10. Robinet d'arrêt suivant la revendication 9, dans lequel le boîtier est constitué par une buselure (19), et forme un module de construction avec la manchette (20), le ressort (22) et le support de manchette (23).

11. Robinet d'arrêt suivant la revendication 10, dans lequel le module de construction est pressé par le bas dans le corps de robinet (1).

12. Robinet d'arrêt suivant l'une quelconque des revendications précédentes, dans lequel le corps de fermeture (13) est déplacé axialement par un filet (14, 15) dans le corps de tête (1).

13. Robinet d'arrêt suivant l'une quelconque des revendications 1 à 11, dans lequel le corps de fermeture (13) est déplacé axialement par un filet sur l'élément de commande.

14. Robinet d'arrêt suivant l'une quelconque des revendications précédentes, constituant un module de construction complet à insérer dans des armatures sanitaires de dimensions standard.
